# EUROPÄISCHE PATENTSCHRIFT

(11) **EP 1 378 740 B1**
(45) Veröffentlichungstag und Bekanntmachung des Hinweises auf die Patenterteilung: **01.06.2005**
(21) Anmeldenummer: 03014656.7
(22) Anmeldetag: 27.06.2003
(51) Int. Cl.: G01M 5/00, E04H 12/00

(54) **Vorrichtung zum Kontrollieren eines Mastes**
Device for controlling a mast
Dispositif pour contrôler d'un mât

(30) Priorität: 01.07.2002 DE 10229448
(43) Veröffentlichungstag der Anmeldung: 07.01.2004
(73) Patentinhaber: Reiners, Christa, 41812 Erkelenz (DE)
(72) Erfinder: Reiners, Christa, 41812 Erkelenz (DE)
(74) Vertreter: von Creytz, Dietrich, Dipl.-Phys.

(56) Entgegenhaltungen:
- EP-A- 0 638 794
- DE-A- 10 008 201
- DE-A- 19 634 888
- FR-A- 2 745 081
- US-A- 6 055 866

## Beschreibung

Die Erfindung betrifft eine Vorrichtung zum Kontrollieren der Stabilität eines im Freien im Boden stehend standfest verankerten Lampenmastes mit Hilfe eines Sensors, wobei an dem Mast eine Leuchte oder dergleichen dauerhaft fixiert ist. Die noch vorhandene Stabilität beschreibt auch den Alterungsprozeß eines Mastes.

Im Rahmen der Erfindung wird unter dem Begriff "Boden" ein Fundament irgendeiner Art, z.B. in einem Straßen- oder Bürgersteigpflaster, im Acker oder auf bzw. an einem Gebäude, verstanden. Mit "verankert" wird eine Fixierung bzw. Fundamentierung des Mastes relativ zum Boden für die jeweils erstrebte und zu kontrollierende Standfestigkeit gemeint. Der Begriff "Lampenmast" umfaßt vor allem Laternenmasten, im weiteren Sinne aber auch Ampelmasten oder Träger von Verkehrs- oder Werbeschildern bzw. Werbeanlagen. Die Leuchte ist in erster Linie als Mittel zur Beleuchtung der Umgebung zu verstehen. Sie kann aber beispielsweise auch als Mittel zum Betrieb einer Ampel oder zum Ausleuchten einer Werbung dienen. Ein erfindungsgemäß zu kontrollierender Mast kann teilweise oder ganz aus Metall, insbesondere Stahl oder Aluminium, aus Kunststoff, Holz, Beton oder dergleichen auf dem Sachgebiet einschlägiger Materialien bestehen.

In DE 196 34 888A wird ein Wegsensor offenbart, der vorübergehend, nämlich bei der jeweiligen Messung am Lampenmast fixiert wird. Der Wegsensor soll die Auslenkung des jeweils zu prüfenden Mastes als Antwort auf eine bewußt herbeigeführte mechanische Belastung messen. Bei den bekannten Sensoren handelt es sich fast durchweg um elektrisch arbeitende bzw. elektronische Geräte. Derartige Geräte sind für Dauermessungen im Freien weder vorgesehen noch - bei wirtschaftlich vertretbarem Aufwand - geeignet.

In GB 22 34 353 A wird ein Sensor beschrieben, der bereits sich erst bildende mechanische Fehler einer Flugzeugkarosserie registrieren und weitermelden können soll. An diversen Stellen des Flugzeugs werden Sensoren verschiedener Art positioniert. Die dabei ermittelten Signale werden ständig vom Personal auf einem Bildschirm überprüft und zugleich elektronisch gespeichert. Die Sensoren und die zugehörigen Signalgeber bzw. Speicher sind dem Sicherheitsstandard eines Flugzeugs entsprechend aufwendig elektrisch bzw. elektronisch ausgebildet und eine Kontrolle der Sensoren usw. ist bei jeder der häufigen Inspektionen des Flugzeugs erforderlich. Für eine Prüfung von Lampenmasten ist diese Technik weit überzogen und schon aus Kostengründen nicht anwendbar.

Die nicht vorveröffentlichte DE 101 13 039 A1 betrifft eine Vorrichtung zur mechanischen Überwachung der Stabilität des Turms einer Windenergieanlage.. Im Bekannten wird im Bereich des Turmfußes ein auf Dehnungsmeßstreifen basierender Sensor angebracht. Dieser Schwingungswächter soll dazu dienen, das mechanische Lebensalter des überwachten Turms zu kontrollieren. Eine Windenergieanlage soll eine Lebensdauer von zwanzig Jahren haben. Elektrische Meßmittel, wie die im Bekannten vorgesehenen Dehnungsmeßstreifen, altern jedoch in viel kürzerer Zeit.

Ein Verfahren zum Prüfen der Stand- und Biegefestigkeit - Stabilität - von stehend im Boden verankerten Lampenmasten wird in EP 06 38 794 B1 beschrieben. Bei dem bekannten Verfahren wird der jeweils zu prüfende Mast einem variablen Biegemoment ausgesetzt, indem er mit einer oberhalb seiner Verankerung eingeleiteten und im Verlauf des Prüfvorgangs steigenden Kraft belastet wird. Zur Bestimmung der Stabilität des Mastes werden sowohl die genannte Kraft als auch die Strecke, um die der Mast aufgrund des Biegemoments seitlich ausgelenkt wird, zeitgleich mit Sensoren gemessen.

Eine ähnliche Mast-Belastungsprüfung wird in DE 100 08 201 A1 offenbart. Hierbei wird der mit dem Biegemoment belastete Lampenmast durch plötzliches Wegnehmen der einwirkenden Kraft in Eigenschwingung versetzt. Aus der Amplitude und der Dämpfung der Eigenschwingung lassen sich kennzeichnende Rückschlüsse auf die Stabilität des jeweiligen Mastes ziehen. Die Eigenfrequenz des Mastes kann sich durch Korrosion des Mastes ändern. Aus einer Abweichung der Eigenfrequenz vom Ursprungs- oder Normalwert kann daher auf den Erhaltungszustand des Mastes geschlossen werden.

Bei den bekannten Meßmethoden an Lampenmasten wird davon ausgegangen, daß jeder einzelne Mast, z.B. alle Laternenmasten einer Stadt, in regelmäßigen Abständen auf Stabilität kontrolliert werden. Dabei werden zwar so sichere Meßergebnisse erhalten, daß man bei einem für gut befundenen Mast dessen Stabilität bis zur nächsten nach vielleicht fünf Jahren fälligen Prüfung garantieren kann. Nach dem bekannten Verfahren muß aber jeder einzelne Mast geprüft werden und dabei muß auf jeden einzelnen Mast mit Hilfe der Krafteinheit je ein Biegemoment aus mindestens zwei Richtungen - nach Art einer für den jeweiligen Mast nicht immer unproblematischen "Zerreißprobe" - ausgeübt werden.

Der Erfindung liegt die Aufgabe zugrunde, unter den routinemäßig zur Prüfung anstehenden Lampenmasten eine Vorauswahl zu treffen, die es erlaubt, alle mit Sicherheit stabilen Masten von der Belastung-Kontrolle bekannter Art auszunehmen und nur diejenigen Masten genauer zu untersuchen, die bei der Vorprüfung Anlaß zu Zweifeln gegeben haben.

Die erfindungsgemäße Lösung wird für die Vorrichtung eingangs genannter Art im Anspruch 1 angegeben. Einige Verbesserungen und weitere Ausgestaltungen der Erfindung werden in den Unteransprüchen beschrieben.

Erfindungsgemäß wird mindestens ein permanent an dem Lampenmast fixierter, auf mechanische Weise arbeitender Schwingungssensor vorgesehen, der wenigstens eine der oben erläuterten Schwingungstypen registrieren bzw. prüfen kann, "Fixiert" an dem Lampenmast bedeutet dabei, daß der Schwingungssensor dauerhaft (unmittelbar oder mittelbar) am Mast befestigt ist. Vorzugsweise soll ein außen am Mast vorgesehener Schwingungssensor im oberen Bereich des Mastes in solcher Höhe - "in der Höhe" - über dem Boden fixiert werden, daß der Sensor ohne Hilfsmittel, zum Beispiel ohne eine Leiter, nicht erreichbar ist. Die Aufstellung von Mast und daran fixiertem Sensor "im Freien" bedeutet, daß beide Teile gegebenenfalls Wind und Wetter ausgesetzt sind. Der Begriff "Schwingungssensor" umfaßt im Rahmen der Erfindung mechanische Schwingungsfühler aller Art, also unter anderem sowohl rein mechanische Biegeschwingungsfühler und Eigenschwingungsfühler als auch akustische Schwingungsfühler, die für Langzeitkontrollen - zum Beispiel mindestens ein Jahr - geeignet sind.

Der erfindungsgemäße mechanische Schwingungssensor registriert eine zufällige (unvorhersehbare) Bewegung des Mastes und/oder dessen Gründung als Reaktion auf eine von außen, z.B. durch den Wind oder den Stoß eines Kraftfahrzeugs, ausgeübten Kraft. Gemäß weiterer Erfindung wird es besonders bevorzugt, wenn nicht nur der Schwingungssensor selbst sondern auch die ihm zugeordneten Display- und/oder Speichermittel mechanisch geschaltet werden, bevorzugt auch selbst mechanisch arbeiten. Zu berücksichtigen ist dabei, daß die Temperaturen im Bereich eines im Freien stehenden Lampenmastes zwischen minus vierzig und plus sechzig Grad Celsius schwanken können. An den Grenzen dieses Temperaturbereichs sind elektrische oder elektronische Sensor- und Speichermittel anfällig. Trotzdem liegt es im Rahmen der Erfindung, die mit dem jeweiligen Schwingungssensor ermittelten Werte auch zentral, zum Beispiel über Draht oder Lichtleiter, drahtlos oder über ein digitales Netz, zu erfassen, auszuwerten und/oder zu speichern.

Erfindungsgemäß kann der Schwingungssensor unter anderem unmittelbar an der Außenfläche des oberen Mastteils, im Sicherungskasten (hinter der Revisionstür eines Lampenmastes), an einer Leuchte oder in der zugehörigen Lampe, zum Beispiel in deren Fassung oder Sockel, aber auch in einem zwischen herkömmlicher Fassung und Sockel besetzten Adapter angeordnet werden. Der Schwingungssensor kann ferner mittelbar unter Zwischenschaltung eines mit dem Mast zu verbindenden Gegenstands am Lampenmast fixiert werden.

Der erfindungsgemäße Schwingungssensor, der eine zufällige Mastbewegung als Reaktion auf eine von außen ausgeübte Kraft, zum Beispiel einen Windstoß oder einen Schub durch ein Kraftfahrzeug, erfaßt, soll mechanisch arbeiten, damit Langzeitmessungen bzw. -überwachungen möglich werden. Im Rahmen der Erfindung wird es besonders bevorzugt, die jeweilige mechanische Messung unter Ausnutzung der Trägheit von Massekörpern vorzunehmen. Dabei können die Massekörper wie Pendel aufgehängt werden, so daß sie als Reaktion auf eine von außen auf den Mast einwirkende Kraft ausschwingen.

Wenn ein erfindungsgemäßer Pendelsensor die Möglichkeit hat, nach Ende der Wirkung der äußeren Kraft frei zurückzuschwingen, aber nicht in die ursprüngliche Position gelangt, kann das als Zeichen für eine bleibende Auslenkung und als Anlaß für eine (herkömmliche) Belastungsprüfung angesehen werden. Ein solcher Pendel-Schwingungssensor kann als "Biegespeichersensor" bezeichnet werden.

Wenn die Masse des Pendelsensors so aufgehängt ist, daß sie als Reaktion auf einen Stoß in eine bestimmte Richtung ausschwingt, aber (bevorzugt von einer vorgegebenen Stoßkraft an) in der ausgelenkten Stellung hängenbleibt, kann aus der erreichten Position der Masse geschlossen werden, aus welcher Richtung der Stoß kam. Ein solcher Schwingungssensor kann als "Richtungsspeichersensor" bezeichnet werden.

Schließlich kann die träge Masse des erfindungsgemäßen Sensors als Mittel zum Zählen von auf den Mast einwirkenden Stößen ausgebildet werden. Beispielsweise kann durch einen Stoß vorgegebene Mindestgröße ein Massekörper auf Grund seiner Trägheit) aus einer Ursprungsposition in eine Sammelposition befördert werden. Wenn dann ein neuer Massekörper (bevorzugt selbsttätig mechanisch) in die Ursprungsposition gebracht wird und ein neuer Stoß auf den Mast wirkt, springt auch dieser Massekörper in die Sammelposition. Auf diese Weise läßt sich speichern, wie viele Stöße einer Mindeststärke - seit der letzten Prüfung - auf den Mast gewirkt haben. Ein Schwingungssensor dieser Art kann als "Ereignisspeichersensor" bezeichnet werden.

Der jeweilige erfindungsgemäße Sensor soll - wie gesagt - bevorzugt in der Höhe des Mastes, an oder in diesem selbst aber auch an oder in einem am Mast befestigten Gegenstand fixiert werden. Als Gegenstand in diesem Sinne können beispielsweise die Leuchte des Lampenmastes oder ein Hinweis- bzw. Werbeleuchtkasten angesehen werden. Im Rahmen der Erfindung kann es dann günstig sein, den Schwingungssensor als mechanische Schwingungssicherung des Stromkreises einer am Mast ohnehin vorgesehenen Lampe, zum Beispiel integriert in deren Fassung, auszubilden. Die mechanische Schwingungssicherung kann gegebenenfalls in ihrer Wirkung wie eine elektrische Überlaßsicherung ausgebildet und eingesetzt werden. Wenn der jeweilige Lampenmast, zum Beispiel wegen einer Instabilität (irgendwo am Mast oder in dessen Fundament) eine bei üblicher Belastung außerhalb der zulässigen Norm liegende Schwingung ausführt, soll die mechanische Schwingungssicherung ansprechen und (ständig oder vorübergehend) den Stromkreis einer als Signalgeber wirkende Lampe bzw. Leuchte, (bevorzugt auf mechanische Weise) trennen.

Die diversen erfindungsgemäßen Meßsysteme können je nach Anwendungsfall und Bedarf einzeln oder in beliebigen Kombinationen eingesetzt werden.

Durch die Erfindung wird eine Non-Stop-Kontrolle geschaffen, so daß die meisten erfindungsgemäß ausgestatteten Masten überhaupt nicht gesondert durch bewußtes Ausüben eines Biegemoments belastet werden müssen. Dadurch fallen nicht nur der entsprechende Arbeitsaufwand sondern auch die Gefahr einer als Folge der bewußt ausgeübten Belastung auftretenden Schädigung von Mast oder Fundament weg. Anstelle dieser künstlichen Belastung werden für die Vorprüfung die unkontrolliert natürliche Belastung des Mastes durch Wind und Wetter, denen der Mast auf jeden Fall permanent (Tag und Nacht) ausgesetzt ist und standhalten muß, oder (unerwünschte) Kraftfahrzeug-Anremplungen ausgewertet. Hinzu kommt, daß die erfindungsgemäße Einrichtung nicht nur eine dauernd aktive Mastkontrolle sondern auch eine Kontrolle des Mastes vom ersten Tage (Baubeginn) an erlaubt. Damit können sogar Baufehler (zum Beispiel des Mastes oder dessen Gründung) praktisch sofort registriert und beim Hersteller oder Aufsteller geltend gemacht werden.

Gemäß weiterer Erfindung erscheint es günstig, wenn ein nur für Schwingungssignale außerhalb einer einem intakten Mast entsprechend vorgegebenen Norm empfindlicher Schwingungssensor und/oder Signalgeber vorgesehen wird. In diesem Sinne liegt es im Rahmen der Erfindung, mit dem Schwingungssensor bzw. Signalgeber ein nur für die außerhalb der Norm liegenden Schwingungssignale durchlässiges Filter zu kombinieren.

Anhand der schematischen Zeichnung eines Ausführungsbeispiels werden Einzelheiten der Erfindung unter Hinweis auf einen Laternenmast erläutert. Es zeigen
- **Fig. 1**: eine Peitschenlateme;
- **Fig. 2 a, b**: einen Biegespeichersensor in zwei Schnitt-Ansichten;
- **Fig. 3 a, b**: einen Ereignisspeichersensor in zwei Schnitten bzw. Ansichten; und
- **Fig. 4 a, b**: einen Richtungsspeichersensor in zwei Schnitten bzw. Ansichten.

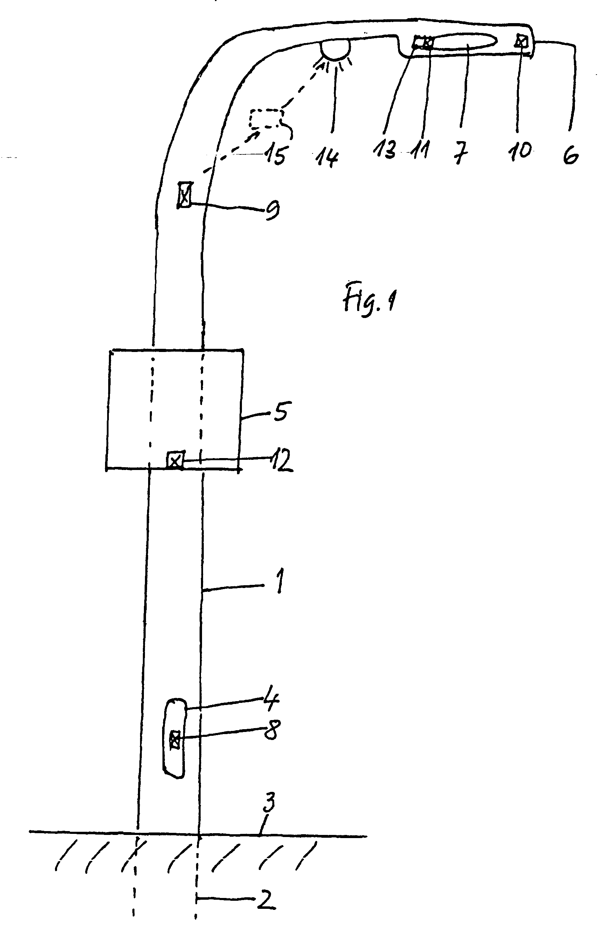

In Fig. 1 wird eine als Peitschenmast ausgebildete Straßenlaterne im Prinzip dargestellt. Der insgesamt mit 1 bezeichnete Mast wird mit seinem Fuß 2 im Boden 3 so verankert, daß er normalerweise für mindestens dreißig Jahre Lebensdauer stabil steht. Der Mast 1 besitzt in seinem unteren (ohne Leiter zugänglichen) Bereich eine Revisionstür 4, z.B. mit darin vorgesehenem Sicherungskasten (nicht gezeichnet). In größerer Höhe wird am Mast 1 ein Solarpanel und/oder ein Werbeschild 5 angedeutet. Am oberen, gebogenen Ende des Mastes befindet sich eine insgesamt mit 6 bezeichnete Leuchte mit darin installierter Lampe 7.

Erfindungsgemäß soll an dem Mast 1 mindestens ein mechanischer Schwingungssensor permanent fixiert werden. Gemäß Fig. 1 kann ein Schwingungssensor 8 im Mast 1 hinter der Revisionstür 4 (oder an anderer Stelle innerhalb des Mastes) installiert werden. Alternativ oder zusätzlich kann ein Schwingungssensor 9 im oberen Mastbereich und/oder ein Schwingungssensor 10 in der Leuchte 6 bzw. ein Schwingungssensor 11 an einer Fassung bzw. an einem Sockel 13 oder in einem Adapter der Lampe 7 vorgesehen werden. Schließlich kann ein Schwingungssensor 12 mit dem Werbeschild 5 bzw. Solarpanel kombiniert werden. Vorstehende Aufzählung ist im Rahmen der Erfindung nicht abschließend.

Mit den mechanischen Schwingungssensoren 8 bis 12 werden im Rahmen der Erfindung im allgemeinen zumindest mechanisch zu betätigende bzw. zu schaltende Anzeiger (Displays) gekoppelt. Grundsätzlich kann auch ein bei Aktivierung ein optisches oder akustisches Signal abgebender Signalgeber 14 (gegebenenfalls sichtbar oder hörbar) am Mast 1 vorgesehen werden. Im Falle des Sensors 11 in der Fassung 13 einer Straßenlaterne wird es bevorzugt, wenn die Lampe 7 selbst - bevorzugt eine von zwei in der Leuchte 6 befindlichen Lampen 7 - als Signalgeber ausgenutzt wird. Der Schwingungssensor 11 kann als mechanische Schwingungssicherung der Lampe 7 ausgebildet werden. Als besonders vorteilhaft in diesem Zusammenhang hat sich eine in die Leuchte 6 oder in die Fassung 13 der Lampe 7 integrierte Schwingungssicherung erwiesen, weil die Installation praktisch keinen zusätzlichen Aufwand (im Verhältnis zum Stand der Technik) erfordert.

Mit dem Schwingungssensor 8 bis 12 bzw. Signalgeber 7, 14 kann ein nur für Schwingungssignale außerhalb einer einem intakten Mast 1 entsprechend vorgegebenen Norm durchlässiges Filter kombiniert werden. Ein solches Filter 15 wird mit gestrichelten Linien in Fig. 1 zwischen dem Schwingungssensor 9 und dem Signalgeber 14 symbolisch dargestellt.

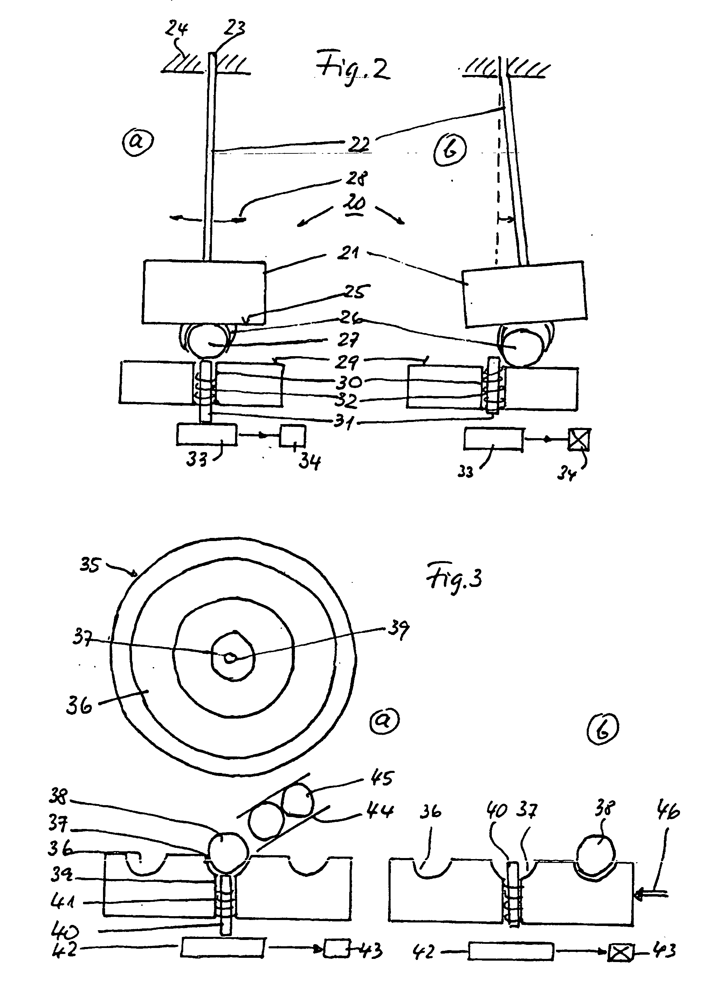

Erfindungsgemäß wird es bevorzugt, nicht nur den Schwingungssensor sondern auch die zugehörige Anzeige bzw. den zugehörigen Speicher mechanisch auszubilden, weil es dann möglich ist, den Sensor unabhängig von Temperaturschwankungen betreiben sowie einen jahrelang wartungsfreien Betrieb gewährleisten zu können. Ausführungsbeispiele von solchen mechanischen Schwingungssensoren werden anhand der Fig. 2 bis 4 erläutert.

Die Fig. 2a, b zeigen zwei Schnitt/Ansichten eines obengenannten Biegespeichersensors. Der Name deutet darauf hin, daß dieser Sensor Verbiegungen von Mast oder Mastfundament gegenüber der vorgeschriebenen Position erfaßt und speichert. Herzstück des Sensors nach Fig. 2 a und b ist ein freischwingendes Pendel 20 bestehend aus einer trägen bzw. schweren Masse 21, die an einem elastischen Stab 22 aufgehängt ist. Der Stab 22 soll am oberen Ende 23 an einer (am Mast fixierten) Halterung 24 statisch geklemmt werden. An der Unterseite 25 der schweren Masse 21 befindet sich eine Kugelhalterung 26, in der eine Kugel 27 leicht drehbar gehalten wird. Beim Schwingen der schweren Masse 21 in Schwenkrichtung 28 rollt die Kugel 27 auf einer (am Mast 1 fixierten) Rollfläche 29 ab. Die Rollfläche 29 besitzt in ihrer Mitte, senkrecht unter der Klemmung des oberen Endes 23 des Stabs 22 eine vertikale Bohrung 30, in welcher ein Stab 31 mit Hilfe einer Feder 32 nach oben, gegen die Kugel 27 gedrückt wird. In der Position nach Fig. 2a ruht der Stab 31 mit seinem unteren Ende auf einem mechanischen Schalter 33 mit zugehörigem Anzeiger 34. Wenn die schwere Masse 21 als Folge einer Schwingung des Mastes 1 oder eines auf den Mast ausgeübten Stoßes in der Richtung 28 ausschwingt, wird die Kugel 27 vom oberen Ende des Stabs 31 wegbewegt, so daß dieser durch die Wirkung der Feder 32 nach oben gedrückt wird und seinen Kontakt mit dem mechanischen Schalter 33 verliert. Dieser soll dadurch aktiviert werden und den Anzeiger 34 schalten können.

Ein intakter Mast mit intaktem Fundament bewegt sich jedoch am Ende einer Schwingung wieder in seine ursprüngliche Position. Das Gleiche soll für die schwere Masse 21 nach Fig. 2 bei Schwingamplituden größer als 1,0° gelten. Die bevorzugte Anordnung mit an einem elastischen Stab 22 (anstelle eines Fadens) aufgehängter schwerer Masse hat den Vorteil, daß die Masse 21 die ursprüngliche vertikale Position unter ihrer Aufhängung immer dann einnimmt, wenn der Mast in die ursprüngliche Position zurückgeht und die Auslenkung des Stabs 22 größer als die genannten 1,0° war.

Beim Zurückschwingen der Masse 21 nach Fig. 2 rollt die Kugel 27 auf der Rollfläche 29 ab, sie kann dann bei entsprechender Auswahl der Feder 32 den Stab 31 wieder in der Bohrung 30 nach unten drücken, so daß der mechanische Schalter 33 inaktiviert wird. Wenn diese Situation in der Praxis eintritt, wird mechanisch nichts gespeichert. Wenn jedoch der Mast nach einer äußeren Belastung - gegebenenfalls im Anschluß an ein Ausschwingen - nach Fig. 2b schräg - das heißt abweichend geneigt von der ursprünglichen Stellung - stehen bleibt, kommt das Pendel 20 mit der schweren Masse 2 nicht wieder in die ursprüngliche Position, so daß der Schalter 33 bzw. sein Anzeiger 34 die fragliche (verbleibende) Mastbiegung speichert. Aus diesem Grunde wird der Pendelsensor nach Fig. 2 Biegespeichersensor genannt.

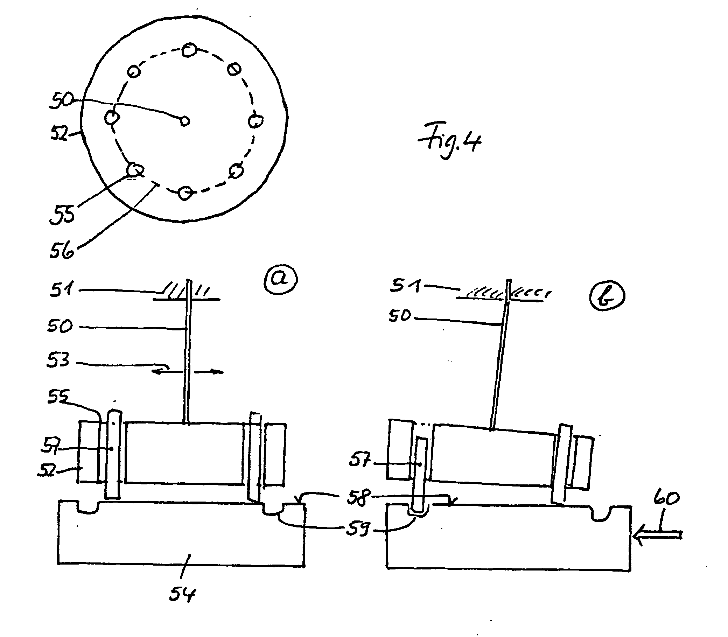

Fig. 3 zeigt zwei Schnitte bzw. Ansichten eines erfindungsgemäßen Ereignisspeichersensors. Herzstück dieses Sensors ist eine im Prinzip kreisförmige (am Mast 1 fixierte) Sensorplatte 35, die auf ihrer Oberseite eine kreisförmige Rinne 36 und im Zentrum eine etwa halbkugelförmige Vertiefung 37 besitzt. In der ursprünglichen Ruheposition liegt in die Vertiefung eine Kugel 38, die an sich auch in der Rinne 36 im Kreis rollen könnte. Die träge bzw. schwere Masse wird in diesem Fall durch die Kugel 38 gebildet.

Unterhalb der Vertiefung 37 und unterhalb der Kugel 38 kann sich nach Fig. 3 eine vertikale Bohrung 39 mit darin vertikal beweglich gelagertem Stab 40 befinden, der durch eine Feder 41 nach oben, in Richtung auf die Kugel 38, gedrückt wird. Das untere Ende des Stabs 40 kann sich - ähnlich wie bei Fig. 2 - auf einem Schalter 42 abstützen, der mit einem Anzeiger 43 gekoppelt ist. Schräg oberhalb der Position der Vertiefung 37 befindet sich in Fig. 3 eine Rollbahn 44 mit Ersatzkugeln 45. Fig. 3a zeigt die Sensorplatte 35 in der Draufsicht (oben) und im vertikalen Schnitt (unten).

Wenn auf die Sensorplatte 35 nach Fig. 3a ein Stoß 46 in der angegebenen Richtung ausgeübt wird, springt die jeweils in der zentralen Vertiefung 37 befindliche Kugel 38 nach Fig. 3b infolge der auf sie wirkenden Trägheitskraft entgegen der Stoßrichtung aus der Vertiefung 37 heraus in die Rinne 36. Wenn unterhalb der Vertiefung 37 der durch eine Feder nach oben gedrückte Stab 40 vorgesehen ist, wird der Stab (nach Wegfall des Drucks der Kugel 38) durch die Feder 41 nach oben gedrückt und der Schalter 42 entsprechend aktiviert. Befinden sich jedoch noch Kugeln 45 in der Rollbahn 44, so gelangt eine neue Kugel in die Vertiefung 37. Sie drückt den Stab 40 wieder herunter. Wirkt dann ein weiterer Stoß 46 auf den Mast 1 und damit auf die Sensorplatte 35, springt auch die neue Kugel aus der Vertiefung 37 in die Rinne 36. Auf diese Weise kann der Kontrolleur selbst nach längerer Betriebsdauer feststellen, wie viele Stöße seit der letzten Kontrolle auf den Mast eingewirkt haben. Mit Hilfe der Kugeln werden die fraglichen Ereignisse gezählt. Aus diesem Grunde wird die Anordnung nach Fig. 3 als Ereignisspeichersensor bezeichnet.

Übrigens, wenn der gefederte Stab 40 mit darunter befindlichem Schalter 42 in Fig. 3 vorgesehen wird, kann durch den Anzeiger 43 demonstriert werden, wenn, alle Kugeln aus der Rollbahn 44 verbraucht und auch bereits aus der Vertiefung 37 in die Rinne 36 gestoßen worden sind.

Mit Hilfe der Anordnung nach Fig. 4 läßt sich erfindungsgemäß die Richtung eines auf den jeweiligen Mast 1 ausgeübten Stoßes erfassen und (rein mechanisch) speichern. Herzstück dieses Gerätes ist eine an einem elastischen Stab 50 an einer Halterung 51 aufgehängte träge bzw. schwere Masse 52, die beim Schwingen in Schwenkrichtung 53 relativ zu einer Bodenplatte 54 bewegt wird. Die Halterung 51 und die Bodenplatte 54 werden am Mast 1 fixiert.

Die bewegliche schwere Masse 52 besitzt mehrere (etwa vertikale) Bohrungen 55, die längs einer Kreislinie 56 verteilt sein können, wie das in der Draufsicht der schweren Masse 52 (Fig. 4a oben) dargestellt wird. In jeder der Bohrungen 53 befindet sich lose ein Stab 57, der sich auf der glatten Oberseite 58 der Bodenplatte 54 abstützt. In der Oberseite 58 befindet sich eine kreisförmige Rinne 59, die einen geringfügig größeren Durchmesser als die Kreislinie 56 hat und bei senkrecht hängender Masse 52 koaxial zu der Kreislinie liegt. Die Durchmesserdifferenz der beiden Kreislinien wird - wie das Folgende zeigt - durch die Mindeststoßkraft vorgegeben, deren Richtung gerade noch registriert werden soll.

Wenn die schwere Masse 52 infolge eines in der gezeichneten Pfeilrichtung auf die Bodenplatte 54 oder Halterung 51 wirkenden Stoßes 60 in der Schwenkrichtung 53 zur Seite bewegt wird und die Bewegung so groß ist, daß die Kreislinie 56 an einer Stelle mit der Rinne 59 zur Deckung kommt, sinkt mindestens einer der Stäbe 57 in seiner Bohrung 53 nach unten in die darunter fallende Rinne 59, wobei er zum Teil in der Bohrung 53 bleibt. Das Ergebnis ist, daß die Masse 52 in dieser Position festhängt und nicht wieder zurück in die Ursprungsstellung schwingen kann. Aus der erreichten Schwenkposition der schweren Masse 52 kann man entnehmen, aus welcher Richtung der Stoß 60 gekommen ist. Die Richtung des Stoßes wird also durch die Einrichtung nach Fig. 4 gespeichert. Aus diesem Grunde wird das Gerät als Richtungsspeichersensor bezeichnet.

Bei einer anderen Ausführung nach Fig. 4 kann die Rinne 59 so dimensioniert werden, daß nach dem Schwanken der Masse 52 ein Stab 57 seine Bohrung verläßt, in die Rinne 59 hineinfällt sowie dort liegenbleibt und damit die Richtung des verursachenden Stoßes speichert". Anschließend kann in diesem Fall die Masse 52 zurückschwingen, so daß sie für eine weitere Stoßrichtungsanzeige bereit ist.

Es wird eine Vorrichtung zum Kontrollieren der Stabilität eines im Freien im Boden stehend dauerhaft fixierten Lampenmastes beschrieben. Um bei einer Kontrolle nicht alle Befestigungsmittel sondern nur diejenigen prüfen zu müssen, deren Stabilität fraglich ist, wird an dem Mast mindestens ein vorzugsweise mechanisch, aber vor allem beim Speichern und/oder Weiterleiten des jeweiligen Signals auch elektro-mechanisch, arbeitender Schwingungssensor permanent fixiert.

### Bezugszeichenliste:

- 1 =: Mast
- 2 =: Mastfuß
- 3 =: Boden
- 4 =: Revisionstür
- 5 =: Werbeschild
- 6 =: Leuchte
- 7 =: Lampe
- 8-12 =: Schwingungssensor
- 13 =: Lampenfassung
- 14 =: Signalgeber
- 15 =: Filter
- 20 =: Pendel
- 21 =: schwere Masse
- 22 =: Stab
- 23 =: oberes Ende (22)
- 24 =: Halterung
- 25 =: Unterseite (21)
- 26 =: Kugelhalterung
- 27 =: Kugel
- 28 =: Schwenkrichtung
- 29 =: Rollfläche
- 30 =: Bohrung
- 31 =: Stab
- 32 =: Feder
- 33 =: Schalter
- 34 =: Anzeiger
- 35 =: Sensorplatte
- 36 =: Rinne
- 37 =: Vertiefung
- 38 =: Kugel
- 39 =: Bohrung
- 40 =: Stab
- 41 =: Feder
- 42 =: Schalter
- 43 =: Anzeiger
- 44 =: Rollbahn
- 45 =: Ersatzkugel
- 46 =: Stoß
- 50 =: Stab
- 51 =: Halterung
- 52 =: schwere Masse
- 53 =: Schwenkrichtung
- 54 =: Bodenplatte
- 55 =: Bohrung
- 56 =: Kreislinie
- 57 =: Stab
- 58 =: Oberseite
- 59 =: Rinne
- 60 =: Stoß

## Patentansprüche

1. Vorrichtung zum Kontrollieren der Stabilität eines im Freien im Boden (3) stehend standfest verankerten Lampenmastes (1) mit Hilfe eines Sensors, wobei an dem Mast eine Leuchte (6) oder dergleichen dauerhaft fixiert ist, **dadurch gekennzeichnet, daß** als Sensor mindestens ein permanent an dem Lampenmast (1) fixierter, auf mechanische Weise arbeitender Schwingungssensor (8 bis 12) vorgesehen ist.

2. Vorrichtung nach Anspruch 1, **dadurch gekennzeichnet, daß** dem mechanisch arbeitenden Schwingungssensor (8 bis 12) ein mechanisch zu betätigendes, bevorzugt ebenfalls mechanisch arbeitendes, Display- bzw. Speichermittel zugeordnet ist.

3. Vorrichtung nach Anspruch 1 oder 2, **dadurch gekennzeichnet, daß** der Schwingungssensor mindestens eine relativ zu einer Bodenplatte (29, 35, 54) bewegliche schwere Masse (21, 38, 52) besitzt.

4. Vorrichtung nach Anspruch 3, **dadurch gekennzeichnet, daß** die schwere Masse (21) als frei schwingendes Pendel (20), vorzugsweise hängend an einem elastischen Stab (22), ausgebildet ist.

5. Vorrichtung nach Anspruch 3, **dadurch gekennzeichnet, daß** die schwere Masse (38) eine Ausgangsposition im Zentrum (37) einer Kreisrinne (36) besitzt und durch einen auf den Mast (1) wirkenden Stoß (35) dauernd in die Kreisrinne (36) zu fördern ist.

6. Vorrichtung nach Anspruch 3 oder 4, **dadurch gekennzeichnet, daß** die schwere Masse (52) beweglich relativ zu einer Bodenplatte (54) aufgehängt ist und daß Mittel (57) zum Arretieren der Masse (52) in jeder Auslenkrichtung vorgesehen sind.

7. Vorrichtung nach mindestens einem der Ansprüche 1 bis 6, **dadurch gekennzeichnet, daß** mit dem Schwingungssensor (8 bis 12) ein nur für Schwingungssignale außerhalb einer einem intakten Mast (1) durchlässiges Filter (15) kombiniert ist.

8. Einrichtung nach mindestens einem der Ansprüche 1 bis 7, **dadurch gekennzeichnet, daß** der Schwingungssensor (10, 11) als mechanische Schwingungssicherung des Stromkreises einer am Mast (1) ohnehin vorgesehenen elektrischen Lampe (7) bzw. Leuchte (6) ausgebildet ist.

9. Einrichtung nach mindestens einem der Ansprüche 1 bis 8, **dadurch gekennzeichnet, daß** der Schwingungssensor (10) in einer am Mast (1) angebrachten Leuchte (6), insbesondere in deren Lampenfassung, bzw. in die jeweilige Lampe (7), vorzugsweise in deren Sockel (13), oder in einem zwischen Fassung und Sockel (13) eingefügten Adapter eingebaut ist.

## Claims

1. Device for controlling the stability of a lamp mast (1), which is positioned outside in the ground (3) and anchored securely, by means of a sensor, whereby a light fitting (6) or the like is permanently secured to the mast, **characterised in that** at least one oscillating sensor (8 to 12) is provided as a sensor which is fixed permanently to the lamp mast (1) and operates mechanically.

2. Device according to claim 1, **characterised in that** a mechanically operated, preferably also mechanically operating, display or storage means is assigned to the mechanically operating oscillating sensor (8 to 12).

3. Device according to claim 1 or 2, **characterised in that** the oscillating sensor comprises at least one heavy mass (21, 38, 52) which is movable relative to a base plate (29, 35, 54).

4. Device according to claim 3, **characterised in that** the heavy mass (21) is designed as a freely swinging pendulum (20), preferably suspended on an elastic rod (22).

5. Device according to claim 3, **characterised in that** the heavy mass (38) has a starting position in the centre (37) of a circular groove (36) and is moved continually into the circular groove (36) by impact (35) acting on the mast (1).

6. Device according to claim 3 or 4, **characterised in that** the heavy mass (52) is suspended movably relative to a base plate (54), and **in that** means (57) are provided for arresting the mass (52) in every swinging direction.

7. Device according to at least one of claims 1 to 6, **characterised in that** a filter (15) that is only permeable for oscillating signals outside an intact mast (1) is combined with the oscillating sensor (8 to 12).

8. Device according to at least one of claims 1 to 7, **characterised in that** the oscillating sensor (10, 11) is designed as a mechanical oscillating fuse of the circuit of an electric lamp (7) or lighting device (6) already provided on the mast (1).

9. Device according to at least one of claims 1 to 8, **characterised in that** the oscillating sensor (10) is built into a lighting device (6) attached to the mast (1), in particular in its lamp fitting, or in the respective lamp (7), preferably in its base (13) or in an adapter inserted between the fitting and the base (14).

## Revendications

1. Dispositif de contrôle, au moyen d'un capteur, de la stabilité d'un mât de lampadaire (1) se trouvant à l'extérieur, solidement ancré debout dans le sol (3), dans lequel un luminaire (6) ou similaire est fixé à demeure sur le mât, **caractérisé en ce qu'**il est prévu, comme capteur, au moins un capteur d'oscillations (8 à 12) à fonctionnement mécanique monté à demeure sur le mât de lampadaire (1).

2. Dispositif selon la revendication 1, **caractérisé en ce qu'**il est associé au capteur d'oscillations (8 à 12) à fonctionnement mécanique un moyen d'affichage et/ou d'enregistrement à commande mécanique et, de préférence, également à fonctionnement mécanique.

3. Dispositif selon la revendication 1 ou 2, **caractérisé en ce que** le capteur d'oscillations (8 à 12) comporte au moins une masse lourde (21, 38, 52) mobile par rapport à un socle (29, 35, 54).

4. Dispositif selon la revendication 3, **caractérisé en ce que** la masse lourde (21) est réalisée en tant que pendule (20) se balançant librement en étant, de préférence, suspendu à une barre flexible (22).

5. Dispositif selon la revendication 3, **caractérisé en ce que** la masse lourde (38) occupe une position initiale au centre (37) d'un canal circulaire (36) et **en ce qu'**il s'agit de transférer cette masse de façon permanente dans le canal circulaire (36) sous l'effet d'un coup (35) agissant sur le mât (1).

6. Dispositif selon la revendication 3 ou 4, **caractérisé en ce que** la masse lourde (52) est suspendue mobile par rapport à un socle (54) et **en ce que** des moyens d'arrêt (57) sont prévus dans toutes les directions de déport de la masse (52).

7. Dispositif selon au moins l'une quelconque des revendications 1 à 6, **caractérisé en ce que** le capteur d'oscillations (8 à 12) est combiné avec un filtre (15) ne laissant passer que les signaux d'oscillations à l'extérieur d'un mât (1) intact.

8. Installation selon au moins l'une quelconque des revendications 1 à 7, **caractérisée en ce que** le capteur d'oscillations (10, 11) est réalisé en tant que sécurité anti-vibratoire mécanique du circuit électrique d'une lampe (7) ou d'un luminaire (6) prévus de toute façon sur le mât.

9. Installation selon au moins l'une quelconque des revendications 1 à 8, **caractérisée en ce que** le capteur d'oscillations (10) est monté dans un luminaire (6) agencé sur le mât (1), et en particulier dans la douille de ce luminaire (6) ou dans la lampe (7) correspondante, de préférence dans le culot (13) de celle-ci, ou bien dans un adaptateur inséré entre la douille et le culot (13).
